# EUROPÄISCHE PATENTSCHRIFT

(11) **EP 0 366 062 B1**
(45) Veröffentlichungstag und Bekanntmachung des Hinweises auf die Patenterteilung: **18.01.1995**
(21) Anmeldenummer: 89119711.3
(22) Anmeldetag: 24.10.1989
(51) Int. Cl.: C09B 67/22, C08K 5/34, C09B 5/62, C09B 67/48

(54) **Mischkristallpigmente auf Basis halogenierter Perylentetracarbonsäurediimide**
Mixed crystals of pigments based on halogenated diimides of perylenetetracarboxylic acid
Cristaux mixtes de pigments à base de diimides halogenées de l'acide pérylènetétracarbonique

(30) Priorität: 27.10.1988 DE 3836536
(43) Veröffentlichungstag der Anmeldung: 02.05.1990
(73) Patentinhaber: HOECHST AKTIENGESELLSCHAFT, 65926 Frankfurt am Main (DE)
(72) Erfinder: Dietz, Erwin, Dr., D-6233 Kelkheim (Taunus) (DE); Urban, Manfred, D-6200 Wiesbaden (DE)

(56) Entgegenhaltungen:
- EP-A- 0 039 912
- EP-A- 0 081 766
- EP-A- 0 176 900
- EP-A- 0 260 648

## Beschreibung

Die vorliegende Erfindung betrifft neue Mischkristallpigmente auf Basis halogenierter Perylen-3,4,9,10-tetracarbonsäure-diimide und ihre Verwendung als Farbmittel zum Pigmentieren von hochmolekularen organischen Materialien.

Halogenverbindungen aus der Reihe von Perylentetracarbonsäure-diimiden, in Fachkreisen kurz als "Perylimide" bezeichnet, sind in der Praxis seit langem bekannt und werden im industriellen Maßstab produziert.

Gattungsgemäße Pigmente vom Perylimid-Typ, sowie davon abgeleitete Chlorierungs- bzw. Bromierungsprodukte, können beispielsweise nach der EP-PS 0 039 912 erzeugt werden durch Überführung der gegebenenfalls halogenierten Rohpigmente in das Sulfat und anschließende Hydrolyse zum Reinpigment. Nach erfolgter Mahlung und Finish zeichnen sie sich durch höchste Transparenz, hohe Farbstärke und kleine mittlere Pigmentteilchendurchmesser aus. Die Wetterechtheit der so erhaltenen Pigmente ist aufgrund der kleinen Teilchengröße nicht voll befriedigend.

Die DE-PS 36 31 678 ist ebenfalls mit Perylimid-Pigmenten befaßt, welche zu über 85 Gew.-% aus der Tetrachlorverbindung bestehen. Die gemäß diesem Stand der Technik beschriebene Herstellungsmethode solcher hochhalogenierter Pigmente läßt sich unter Produktionsbedingungen jedoch nur sehr schwer realisieren, da die zur Ausfällung des Tetrachlorperylimids in einer feinteiligen Form erforderliche Zugabe von Wasser zu dem hohe Mengen Monohydrat aufweisenden Chlorierungsgemisch innerhalb kürzester Zeit bei konstanter, niedriger Temperatur großtechnisch schwer beherrschbar ist. Außerdem ist bei den so erhätlichen Pigmenten die sichere Herstellung der β-modifikation in der vorgegebenen Größenordnung (über 95 Gew.-%) in den meisten Fällen nicht ganz unproblematisch.

Ungeachtet der intensiven Bemühungen auf diesem Arbeitsgebiet zur Vervollständigung der Palette von derartigen Farbmitteln hinsichtlich der vom Verbraucher gewünschten Nuancen besteht für das Pigmentieren von hochmolekularen organischen Materialien immer noch ein großer Bedarf an deckenden organischen Rotpigmenten, insbesondere an gelbstichigen Rotpigmenten, die in steigendem Maße als Ersatz für die ökologisch bekenklichen, anorganischen Rotpigmente eingesetzt werden. Diese Marktlücke konnte bislang aber nicht durch die Nutzung der für den vorgenannten Zweck brauchbaren Tetrachlorperylimid-Pigmente in zufriedenstellender Weise ausgefüllt werden.

Es wurde nun gefunden, daß im Falle von deckenden Rotpigmenten auf Basis halogenierter Perylentetracarbonsäure-diimide mit bis zu 4 Chloratomen ein Chlorgehalt von unter oder gleich 25,2 % zu Pigmenten mit hervorragenden chloristischen Eigenschaften führt, die in der Deckkraft und im Vollton den in der DE-PS 36 31 678 erläuterten Tetrachlor-perylentetracarbonsäure-diimid-Pigmenten deutlich überlegen sind. Solche bei der Chlorierung von Reinperylimid in Monohydrat entstehenden chlorärmeren Pigmente sind aus einem Gemisch von im wesentlichen Trichlor- und Tetrachlorperylimid aufgebaut. Sie können im Anschluß an ihre Synthese mit oder ohne Zwischenisolierung auf verschiedenen Wegen relativ leicht nach den gängigen Feinverteilungs- und Finishverfahren in Pigmentformen mit interessanter Coloristik sowie hoher Deckkraft und dabei in die β-Modifikation überführt werden. Im Gegensatz hierzu läßt sich bei Perylentetracarbonsäure-diimiden mit höherem Chlorgehalt die β-Kristallphase nur sehr schwierig einheitlich und vollständig zustande bringen.

Gleichzeitig hat sich erfindungsgemäß herausgestellt, daß zwei oder mehr - bezüglich der Anzahl und/oder der Natur von als Substituent am polycyclischen System zur Verfügung stehenden Halogenatomen - unterschiedlich halogenierte Perylentetracarbonsäure-diimide unter Bildung von Mischkristallen oder festen Lösungen miteinander vereinigt werden können. Auf anloge Weise wie bei den oben erwähnten Chlorierungsprodukten ist es auch möglich, bromierte Perylentetracarbonsäure-diimide für die Mischkristallbildung einzusetzen.

Unter Mischkristallen versteht man in diesem Zusammenhang, daß eine oder mehrere dem Basispigment zugesetzte Komponenten im Kristallgitter der Wirtverbindung vorliegen. Das Röntgenbeugungsdiagramm eines Mischkristalles zeigt dann nur das (in vielen Fällen aufgeweitete) Kristallgitter der Wirtverbindung, während im Diagramm der entsprechenden mechanischen Mischung alle Komponenten separat nachweisbar sind.

Durch die Mischkristallbildung läßt sich der Anwendungsbereich von halogenierten Perylentetracarbonsäure-diimid-Verbindungen als Farbmittel zum Pigmentieren deutlich erweitern. Die Eigenschaften dieser Mischkristallpigmente unterscheiden sich erheblich von denjenigen der entsprechenden mechanischen Mischungen der Einzelkomponenten. Sie besitzen insbesondere höhere Deckkraft und reinere Farbtöne. Die Echtheiten derselben sind ausgezeichnet.

Gegenstand der vorliegenden Erfindung sind somit Mischkristallpigmente auf Basis von halogenierten Perylen-3,4,9,10-tetracarbonsäure-diimiden (Perylimiden), im wesentlichen gebildet aus zwei oder mehr Einzelkomponenten der allgemeinen Formel I 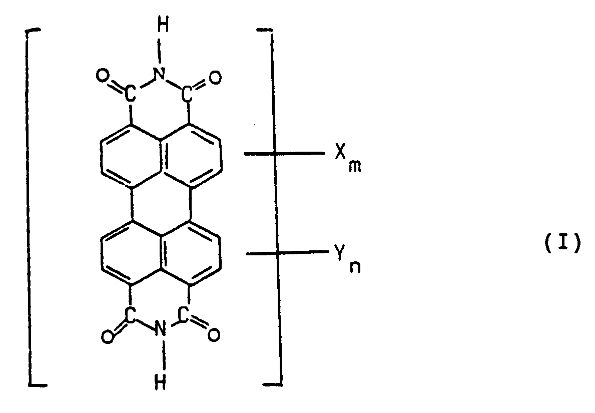
worin X ein Chloratom und Y ein Bromatom bedeutet sowie m und n ganze Zahlen von 0 bis 4 darstellen, dadurch gekennzeichnet, daß der Gesamtchlorgehalt im Mischkristall ≦ 25,2 Gew.-% beträgt und die Mischkristalle überwiegend oder vollständig in der β-Modifikation vorliegen sowie eine mittlere Teilchengröße von ≧ 0,15 µm aufweisen.

Ausgangsstoff für die Herstellung der aus den Einzelverbindungen der allgemeinen Formel I zusammengesetzen erfindungsgemäßen Mischkristallpigmente ist Perylen-3,4,9,10-tetracarbonsäure-diimid (C.I. Pigment Violet 29 - Nr. 71129), wie es als Reinprodukt beispielsweise nach der in der EP-PS 0 039 912 beschriebenen Arbeitsweise durch Behandlung von Rohperylimid mit konzentrierter Schwefelsäure oder entsprechend dem aus der DE-OS 16 19 531 bekannten Verfahren durch Kondensation der zugrundeliegenden Perylentetracarbonsäure mit Ammoniak in wäßriger Lösung erzeugt werden kann. Die Mischkristallbildung erfolgt danach im Verlauf der Halogenierungsoperation beim Chlorieren oder Bromieren des nach den beiden obigen Methoden in reiner Form erhältlichen Perylimids, oder sie wird gezielt über die Synthese von unterschiedlichen Einzelverbindungen der Formel I dadurch bewirkt, daß man Mischungen davon gemeinsam in einem inerten organischen Lösungsmittel durch Erwärmen in Lösung bringt und in der Kälte wieder auskristallisieren läßt, oder man unterwirft Mischungen von feinteiligen Rohpigmenten einem Finish.

Die hier in Rede stehenden Mischkristallverbindungen von halogenierten Perylimiden fallen bei der Synthese allerdings in der Regel als grobkristalline Rohpigmente an. In diesem Zustand sind sie für den Einsatz auf dem Pigmentgebiet noch ungeeignet und müssen zwecks Verbesserung der coloristischen Eigenschaften erst durch chemische und/oder physikalische Nachbehandlungsoperationen besonders aufbereitet werden, was man auf mehreren Wegen besorgen kann.

Deckende Formen aus den erfindungsgemäßen, neuen Mischkristallpigmenten, welche die zuvor herausgestellten charakteristischen Merkmale bezüglich Chlorgehalt, Kristallmodifikation und Teilchengröße erfüllen, werden erhalten, wenn man die oben erwähnten Rohpigmente einem hierauf abgestimmten Feinverteilungs- und Finishprozeß unterwirft. Dieses Vorhaben kann dadurch realisiert werden, daß man zwei oder mehr fein- oder grobkristalline Perylimid-Einzelkomponenten der Formel I, die bezüglich ihres chemischen Aufbaus voneinander verschieden sind, oder grobkristalline Perylimid-Mischkristallverbindungen aus solchen unterschiedlichen Einzelkomponenten der Formel I, zunächst durch
(1) Perlmahlung in einem flüssigen Medium, z.B. Wasser oder inerten organischen Lösungsmitteln wie aliphatische Carbonsäureamide;
(2) Trockenmahlung mit oder ohne Salzzusatz, z.B. anorganischen Salzen, wie Natriumsulfat, Natriumchlorid, Calciumchlorid oder Aluminiumsulfat;
(3) Auflösen in einer konzentrierten anorganischen Säure, z.B. Monohydrat, und nachherige Hydrolysierung durch Eingießen der Lösung in Wasser oder verdünnte Säuren unter Ausfällen, oder
(4) geeignete Syntheseführung, bei welcher die Reaktionsbedingungen so gewählt werden, daß die gebildeten Perylimid-Mischkristallverbindungen nach der Halogenierung in gelöstem Zustand vorliegen und durch Vereinigung dieser Lösung mit Wasser abgeschieden werden,
in die entsprechenden feinteiligen Perylimid-Mischkristallverbindungen überführt und diese anschließend durch einen Finish in einem inerten organischen Lösungmittel oder in einer verdünnten anorganischen Säure bei Temperaturen von 50 ° bis 200 °C, vorzugsweise von 80 ° bis 160 °C, in die aus den Einzelkomponenten der allgemeinen Formel I aufgebauten Perylimid-Mischkristallpigmente umwandelt.

Die Nachbehandlung der Mischkristallverbindungen durch Erhitzen in einem Lösungsmittel kann auch unter erhöhtem Druck stattfinden.

Vorzugsweise werden für den Finish organische Lösungsmittel von polarer Natur verwendet, deren Siedepunkt über 75 °C liegt. Als solche Lösungsmittel kommen u.a. folgende in Frage: Ketone wie z.B. Cyclohexanon; Ether, Glykole und Glykolether wie z.B. Methoxypropanol, Methoxybutanol, Diethylenglykol, Dipropylenglykol, Ethyldiglykol oder Butyldiglykol; aromatische Kohlenwasserstoffe wie z.B. Toluol, Xylole oder Ethylbenzol; aromatische Chlorkohlenwasserstoffe wie z.B. Chlorbenzol, o-Dichlorbenzol, 1,2,4-Trichlorbenzol oder Brombenzol; aromatische Nitroverbindungen wie z.B. Nitrobenzol oder Nitrophenol; Phenol; aromatische Carbonsäuren und deren Ester wie z.B. Benzoesäure-(C₁-C₄)-alkylester; heterocyclische Basen wie z.B. Pyridin, Picoline, Chinolin oder Morpholin; schwefelhaltige Lösungsmittel wie z.B. Dimethylsulfoxid oder Tetramethylensulfon (Sulfolan). Vor allem aber sind als geeignete Lösungsmittel in dieser Hinsicht aliphatische Carbonsäureamide zu nennen, wie z.B. N-Methylpyrrolidon, Formamid und Dimethylformamid.

Bewährt hat sich auch die Verrichtung des Finishs in verdünnten anorganischen Säuren insbesondere in verdünnter Schwefelsäure.

Die Maßnahmen zur Feinverteilung und zum Finish der Mischkristall-Rohpigmente können in Gegenwart von oberflächenaktiven Mitteln vorgenommen werden. Als oberflächenaktive Verbindungen werden hierzu anionische, kationische, nichtionische und/oder amphotere Tenside in Betracht gezogen.

Die Durchführung des Finishs kann in Rührgefäßen erfolgen. Gegenbenenfalls kann sie jedoch auch unter Einwirkung von Scherkräften in Mahlapparaturen oder Knetaggregaten bewerkstelligt werden.

Die Mengenanteile der verschieden halogenierten Perylentetracarbonsäure-diimide der allgemeinen Formel I in den Mischkristallpigmenten können in weitem Bereich variieren. Im allgemeinen ist jede Einzelkomponente in einer Menge von 1 bis 99 %, bezogen auf das Gesamtgewicht des Mischkristalles, vorhanden. Vorzugsweise wird freilich eine der Einzelkomponenten in einer Gewichtsmenge von 70 bis 95 % beteiligt sein. Bezüglich ihrer chemischen Natur kommen als solche am Aufbau der Mischkristallpigmente beitragende Strukturelemente in erster Linie Monochlor-, Dichlor-, Trichlor-, Tetrachlor-, Monobrom- und Dibrom-perylentetracarbonsäure-diimide sowie gemischte Chlor-brom-perylentetracarbonsäure-dimide und unsubstituiertes Perylentetracarbonsäure-diimid in Frage. Besonders bevorzugt sind Mischkristallpigmente, welche einen Gesamtchlorgehalt von 15,0 bis 25,2 Gew.-% aufweisen und sich aus Perylentetracarbonsäure-diimid, Monochlor-, Dichlor-, Trichlor- und Tetrachlor-perylentetracarbonsäurediimiden zusammensetzen, im wesentlichen jedoch ein Gemisch aus Trichlor- und Tetrachlor-perylimid darstellen. Im Falle von Brom liegt der bevorzugte Bereich bei einem Gesamtbromgehalt zwischen 20 und 30 Gew.-%.

Perylentetracarbonsäure-diimid-Verbindungen mit mehr als 4 Chloratomen im Molekül begünstigen hingegen das Entstehen der coloristisch uninteressanten α-Kristallmodifikation und wirken sich negativ auf die anwendungstechnischen Eigenschaften von auf einer derartigen Basis stehenden Pigmenten aus.

Besonders entscheidend für den coloristischen Effekt der erfindungsgemäßen Mischkristallpigmente ist deren mittlerer Teilchendurchmesser, der unter optimalen Bedingungen bei ≧ 0,15 µm liegt. Insbesondere wird mit Rücksicht auf das vorgesehene Einsatzgebiet der Verfahrenserzeugnisse eine Korngrößenverteilung im Bereich von 0,15 µm bis 0,5 µm, bevorzugt zwischen 0,15 µm und 0,3 µm, als unabdingbar betrachtet.

Bei den Mischkristallen entsprechend dieser Erfindung aus halogenierten Perylentetracarbonsäure-diimiden handelt es sich um rote bis rotviolette Pigmente mit hervorragenden rheologischen Eigenschaften, die Färbungen von großer Brillanz, hoher Deckraft und ausgezeichneten Echtheiten liefern.

Die erfindungsgemäßen Mischkristallpigmente lassen sich zum Pigmentieren (Einfärben von hochmolekularen organischen Materialien natürlicher oder synthetischer Herkunft einsetzen:
Hochmolekulare organische Materialien, die mit den beanspruchten Mischkristallpigmenten coloriert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß zu verwendenden Pigmente als Toner oder in Form von Präparationen oder Dispersionen einzusetzen. Bezogen auf das zu pigmentierende hochmolekulare organische Material setzt man die beanspruchten Mischkristallpigmente in einer Menge von vorzugsweise 0,1 bis 10 Gew.-% ein.

Besonders bevorzugte Lacksysteme sind in dieser Hinsicht Einbrennlacke aus der Klasse der Alkyd-/Melaminharz- und Acryl-/Melaminharz-Lacke sowie Zweikomponentenlacke auf Basis von mit Polyisocyanat vernetzbarer Acrylharze und wäßrigen Lacksystemen. Nach der Einarbeitung werden farbstarke, reine und glänzende Lackierungen mit sehr guter Wetterechtheit erhalten. Die erfindungsgemäß hergestellten Mischkristallpigmente besitzen in modernen Lacksystemen ein sehr gutes Fließverhalten, auch bei hohen Pigmentkonzentrationen bei gleichzeitig hervorragender Flockungsstabilität.

Die Mischkristallpigmente nach dieser Erfindung sind als polymerlösliche Farbmittel auch hervorragend geeignet zum Einfärben von verformbaren Kunststoffen, insbesondere für Polyolefine wie Polyethylen, Polypropylen, Polyvinylchlorid und Polystyrol. In diesen Kunststoffen sind die Mischkristallpigmente sehr gut verteilbar und liefern brillante und farbstarke Ausfärbungen.

Zur Beurteilung der Eigenschaften der beanspruchten Mischkristallpigmente in Lacksystemen wurden aus der Vielzahl der bekannten Systeme ein Alkyd-/Melaminharz-Lack (AM6) auf Basis eines mittelöligen, nicht-trocknenden Alkydharzes aus synthetischen Fettsäuren und Phthalsäureanhydrid und eines mit Butanol veretherten Melaminharzes und Anteilen eines nicht-trocknenden Alkydharzes auf Basis von Ricinensäure (kurzölig) sowie ein Acrylharz-Einbrennlack auf Basis einer nicht-wäßrigen Dispersion (TSA-NAD) ausgewählt. In den nachfolgenden Beispielen wird darauf unter der Bezeichnung AM6 bzw. TSA-NAD verwiesen.

Die Rheologie des Mahlguts nach der Dispergierung (Millbase-Rheologie wird anhand der folgenden fünfstufigen Skala beurteilt:
5 dünnnflüssig
4 flüssig
3 dickflüssig
2 leicht gestockt
1 gestockt
Nach dem Verdünnen des Mahlguts auf die Pigmentendkonzentration wurde die Viskosität mit dem Viskospatel nach Rossmann, Typ 301, der Firma Erichsen beurteilt.

Glanzmessungen erfolgten an Folienaufgüssen unter einem Winkel von 20 ° nach DIN 67530 (ASTMD 523) mit dem "multigloss"-Glanzmeßgerät der Firma Byk-Mallinckrodt. Die mittlere Teilchengröße wurde aus den elektronenmikroskopischen Aufnahmen bestimmt.

In den nachstehenden Beispielen beziehen sich Teile jeweils auf Gewichtsteile und Prozente jeweils auf Gewichtsprozente der so beschriebenen Substanzen.

### Beispiel 1

80 g halogenfreies Perylen-3,4,9,10-tetracarbonsäure-diimid, als Reinperylimid hergestellt gemäß Beispiel 1a) der EP-PS 0 039 912, werden bei 25 °C in 2 400 g Schwefelsäure (100 %ig) eingetragen sowie in Lösung gebracht. Danach werden noch 10 g Jod zugefügt, worauf die Vorlage auf 80 bis 90 °C erwärmt wird. Bei dieser Temperatur leitet man nun innerhalb von 3 ½ Stunden 76 g Chlor ein, läßt das Chlorierungsgemisch sodann auf 25 °C abkühlen und tropft 1 600 g 50%ige Schwefelsäure hinzu. Danach wird das ausgefallene Umsetzungsprodukt abgesaugt und mit 78%iger Schwefelsäure nachgewaschen. Anschließend wäscht man den Rückstand durch Behandlung mit Wasser, bis das Filtrat neutral reagiert, und trocknet ihn bei 80 °C.

Man erhält 104,4 g chloriertes Perylentetracarbonsäurediimid als grobkristallines Rohpigment mit einem Chlorgehalt von 25,1%.
Die Chlorgehaltsbestimmung (HPLC-Analyse in Tetrahydrofuran auf einer Latek-Säule 250 x 4 C 18 Go/R5 µm und UV-Detektor bei 513 nm) liefert folgende Werte:
17 % Trichlor-perylentetracarbonsäure-diimid,
81 % Tetrachlor-perylentetracarbonsäure-diimid und
2 % Pentachlor-perylentetracarbonsäure-diimid.
Die Massenspektroskopie liefert folgende Werte:
16 % Trichlor-perylentetracarbonsäure-diimid,
80 % Tetrachlor-perylentetracarbonsäure-diimid und
4 % Pentachlor-perylentetracarbonsäure-diimid.

20 g des zuvor als grobkristallines Rohpigment isolierten, chlorierten Perylentetracarbonsäure-diimids werden zusammen mit 200 ml Dimethylformamid in einen 1-Liter-Porzellanbehälter eingebracht, der mit 1 200 g Quarzitperlen (vom Durchmesser 3 mm) als Mahlkörper gefüllt ist, und darin 12 Stunden lang unter Schütteln auf einer Schwingmühle (Typ ®Vibratom; Hersteller: Siebtechnik Mühlheim) fein vermahlen. Die resultierende Pigmentsuspension wird anschließend abgesiebt und die Quarzitperlen werden mittels Dimethylformamid abgespült. Daraufhin wird das gesammelte Mahlgut mit Wasser verdünnt, abgesaugt, durch Behandlung mit Wasser dimethylformamidfrei gewaschen und bei 80 °C getrocknet.

Man erhält 19,2 g eines Mischkristallpigments, das in der β-Phase vorliegt und eine mittlere Teilchengröße von 0,21 µm besitzt.

Bei der Anspülung des Pigments im AM6-Lack werden brillante, rote und hochdeckende Lackierungen mit einwandfreier Überlackierechtheit erzielt. Die Millbase-Rheologie des erzeugten Produktes (15%ig) wird mit Note 5 bewertet. Dis Viskosität des 5%igen Lackes beträgt 2,4''.

### Beispiel 2

30 g chloriertes Perylen-3,4,9,10-tetracarbonsäure-diimid in Form des grobkristallinen Rohpigments mit einem Chlorgehalt von 25,1 %, erzeugt entsprechend Beispiel 1, werden mit 150 g Natriumsulfat (wasserfrei) gemischt und in einem 1-Liter-Porzellangefäß vorgelegt, das mit 1 300 g Porzellankugeln (vom Durchmesser 12 mm) als Mahlkörper gefüllt ist. Dieser Ansatz wird nunmehr 4 Stunden lang unter Schütteln auf einer Schwingmühle (des Typs wie in Beispiel 1) fein vermahlen. Anschließend wird das Mahlgut abgesiebt, mittels Wasser ausgerührt, sodann abgesaugt, durch Behandlung mit Wasser sulfatfrei gewaschen und bei 80 °C getrocknet.

Man erhält 21,5 g eines Mischkristallpigments, das in der β-Phase vorliegt.
Das Röntgenbeugungsspektrum desselben weist folgende Hauptlinien 2 ϑ CuK_{α} auf:
Starke Linien: 25,59;
Mittlere Linien: 8,97; 16,80; 19,03; 21,51; 24,21; 26,43; 27,09; 27,60
Schwache Linien: 13,25; 15,02;
Die mittlere Teilchengröße des Produktes beträgt 0,175 µm.

Bei der Ausprüfung des Pigments im AM6-Lack werden brillante, rote und hochdeckende Lackierungen mit einwandfreier Überlackierechtheit erzielt.
Die Millbase-Rheologie des Produktes (15%ig) wird mit Note 4 - 5 bewertet. Die Viskosität des 5%igen Lackes beträgt 2,9''.

### Beispiel 3

30 g chloriertes Perylen-3,4,9,10-tetracarbonsäure-diimid in Form des grobkristallinen Rohpigments mit einem Chlorgehalt von 24,1 %, erhalten analog der Vorschrift von Beispiel 1, werden mit 150 g Natriumsulfat (wasserfrei) gemischt und danach in einen 1-Liter-Porzellanbehälter gegeben, der mit 1 300 g Porzellankugeln (vom Durchmesser 12 mm) als Mahlkörper beschickt ist, worauf diese Vorlage 4 Stunden lang unter Schütteln auf einer Schwingmühle (vom gleichen Typ wie in Beispiel 1) fein vermahlen wird. Danach wird das Mahlgut abgesiebt, mittels Wasser ausgerührt, daraufhin abgesaugt, durch Behandlung mit Wasser sulfatfrei gewaschen und bei 80 °C getrocknet. Es resultieren 28,5 g eines feinteiligen Rohpigments.

22 g des vorgängig isolierten feinteiligen Rohpigments werden nun unter Rühren in 220 ml Dimethylformamid eingetragen. Sodann erhitzt man die Mischung auf 100 °C und rührt diesselbe 2 Stunden bei dieser Temperatur nach. Anschließend läßt man auf 25 °C abkühlen, das gefinishte Produkt wird abgesaugt, durch Behandlung mit Wasser dimethylformamidfrei gewaschen und bei 80 °C getrocknet.

Man erhält 21,7 g eines Mischkristallpigments, das in der β-Phase vorliegt und eine mittlere Teilchengöße von 0,27 µm besitzt.
Bei der Ausprüfung des Pigments im AM6-Lack werden brillante, rote und hochdeckende Lackierungen mit einwandfreier Überlackierechtheit erzielt. Die Millbase-Rheologie des Produktes (15%ig) wird mit Note 5 bewertet. Die Viskosität des 5%igen Lackes beträgt 2,7''.

### Beispiel 4

150 g halogenfreies Perylen-3,4,9,10-tetracarbonsäurediimid, hergestellt nach den Angaben in der DE-OS 16 19 531 durch Kondensation von Perylentetracarbonsäure mit Ammoniak, werden in 1 920 g Schwefelsäure (100 %ig) eingetragen und gelöst. Nachdem man in diese Lösung 2,9 g Natriumjodid zugegeben hat, werden nun innerhalb von 6 Stunden 230 g Chlor bei 25°C eingeleitet, wobei man nach Ablauf von 3 Stunden nochmals 2,9 g Natriumjodid nachsetzt. Daraufhin werden dem Chlorierungsgemisch 1 280 g 50%ige Schwefelsäure tropfenweise zugefügt. Das hierbei ausgefallene Reaktionsprodukt wird anschließend abgesaugt, mit 1 350 g 80%iger Schwefelsäure nachgewaschen, sodann durch Behandlung mit Wasser neutral gewaschen und bei 80°C getrocknet. Es resultieren 180,8 g eines chlorierten Perylentetracarbonsäure-diimids in Form des grobkristallinen Rohpigments mit einem Chlorgehalt von 20,4 %.

7,5 g des zuvor als grobkristallines Rohpigment erhaltenen chlorierten Perylentetracarbonsäure-diimids mit einem Chlorgehalt von 20,4 % und 22,5 g chloriertes Perylentetracarbonsäure-diimid mit einem Chlorgehalt von 26,8 % (nahezu reines Tetrachlorperylimid, hergestellt in Form des grobkristallinen Rohpigments analog der Vorschrift von Beispiel 1, werden gemeinsam mit 150 g Natriumsulfat (wasserfrei) gemischt und danach in ein 1-Liter-Porzellangefäß eingebracht, das mit 1 300 g Porzellankugeln (von 12 mm Durchmesser) als Mahlkörper gefüllt ist. Diese Mischung der unterschiedlichen Perylimidpigmente wird daraufhin 4 Stunden lang unter Schütteln auf einer Schwingmühle (vom Typ wie in Beispiel 1) fein vermahlen. Hiernach wird das Mahlgut abgesiebt, mittels Wasser ausgerührt, sodann abgesaugt, durch Behandlung mit Wasser sulfatfrei gewaschen und bei 80°C getrocknet. Die durchgeführte Trockenmahlung ergibt 27,1 g eines feinteiligen Rohpigments.

20 g des soeben isolierten feinteiligen Rohpigments werden nun unter Rühren in 200 ml Dimethylformamid eingetragen, auf 100°C geheizt und 2 Stunden bei dieser Temperatur nachgerührt. Anschließend läßt man auf 25°C abkühlen, das gefinishte Produkt wird abgesaugt, mit Wasser dimethylformamidfrei gewaschen und bei 80°C getrocknet. Man erhält 19,2 g eines Mischkristallpigments, das in der β-Phase vorliegt und eine mittlere Teilchengröße von 0,22 µm besitzt.
Bei der Ausprüfung des Pigments im AM6-Lack werden brillante, rote und hochdeckende Lackierungen mit einwandfreier Überlackierechtheit erzielt. Die Millbase-Rheologie des Erzeugnisses (15 %ig) wird mit Note 5 bewertet. Die Viskosität des 5%igen Lackes beträgt 2,7''. Die Glanzmessung ergibt den Wert 82.

### Vergleich a):

Wird anstelle der vorgängig erläuterten Rohpigmentmischung aus den unterschiedlich chlorierten Bestandteilen nur das in diesem Zusammenhang angegebene chlorierte Perylentetracarbonsäure-diimid-Rohpigment (grobkristallin) mit dem Chlorgehalt von 20,4 % dem oben beschriebenen Feinverteilungs- und Finishverfahren unterworfen, so erhält man ein Mischkristallpigment, das im Röntengiagramm neben der β-Phase noch das Vorhandensein einer anderen Phase (Fremdlinien) anzeigt und eine mittlere Teilchengröße von 0,06 µm besitzt.
Bei der Ausprüfung dieser Vergleichsprobe im AM6-Lack werden brillante, rote und transparente Lackierungen mit hoher Farbstärke erzielt. Die Millbase-Rheologie des Erzeugnisses(15%ig)wird mit Note 1-2 bewertet. Die Viskosität des 5%igen Lackes beträgt 3,5''. Der Glanzwert liegt bei 88.

### Vergleich b):

Wird anstelle der vorgängig erläuterten Rohpigmentmischung aus den unterschiedlich chlorierten Bestandteilen nur das in diesem Zusammenhang angegebene, entsprechend Beispiel 1 hergestellte chlorierte Perylentetracarbonsäure-diimid-Rohpigment (grobkristallin) mit dem Chlorgehalt von 26,8 % (nahezu reines Tetrachlorperylimid) dem oben beschriebenen Feinverteilungs- und Finishverfahren unterworfen, so erhält man ein Pigment, das in der β-Phase vorliegt und eine mittlere Teilchengröße von 0,16 µm besitzt.
Bei der Ausprüfung im AM6-Lack ist diese Vergleichsprobe viel transparenter und dunkler als das erfindungsgemäße Mischkristallpigment von Beispiel 1 mit dem Chlorgehalt von 25,1 %. Die Millbase-Rheologie des Erzeugnisses (15%ig) wird mit Note 5 bewertet. Die Viskosität des 5%igen Lackes beträgt 2,8''.

### Beispiel 5

15 g chloriertes Perylen-3,4,9,10-tetracarbonsäure-diimid in Form des grobkristallinen Rohpigments mit einem Chlorgehalt von 20,4 %, hergestellt gemäß vorstehendem Beispiel 4, und 15 g chloriertes Perylentetracarbonsäure-diimid mit einem Chlorgehalt von 26,8 % (nahezu reines Tetrachlorperylimid), hergestellt als grobkristallines Rohpigment analog der Vorschrift von Beispiel 1, werden gemeinsam mit 150 g Natriumsulfat (wasserfrei) gemischt und in ein 1-Liter-Porzellangefäß gegeben, das als Mahlkörper 1 300 g Porzellankugeln (vom Durchmesser 12 mm) enthält. Das vorgelegte Gemisch der unterschiedlichen Perylimidpigmente wird nunmehr 4 Stunden lang unter der Wirkung einer Schwingmühle (rom Typ entsprechend Beispiel 1) fein vermahlen. Danach wird das Mahlgut abgesiebt, mittels Wasser ausgerührt, daraufhin abgesaugt, durch Behandlung mit Wasser sulfatfrei gewaschen und bei 80°C getrocknet. Auf diese Weise fallen 26,3 g eines feinteiligen Rohpigments an.

20 g des zuvor gewonnenen feinteiligen Rohpigments werden nun unter Rühren in 200 ml Dimethylformamid eingetragen. Sodann erwärmt man die Mischung auf 100°C und rührt dieselbe noch 2 Stunden bei dieser Temperatur nach. Anschließend läßt man auf 25°C abkühlen, das gefinishte Erzeugnis wird abgesaugt, durch Behandlung mit Wasser dimethylformamidfrei gewaschen und bei 80°C getrocknet.

Man erhält 18,7 g eines Mischkristallpigments, das in der β-phase vorliegt und eine mittlere Teilchengröße von 0,29 µm besitzt.

Bei der Ausprüfung des Pigments im AM6-Lack werden brillante, rote und hochdeckende Lackierungen mit einwandfreier Überlackierechtheit erzielt. Die Millbase-Rheologie des Produktes (15%ig) wird mit Note 5 bewertet. Die Glanzmessung ergibt den Wert 87.

### Beispiel 6

150 g halogenfreies Perylen-3,4,9,10-tetracarbonsäure-diimid, hergestellt nach den Angaben in der DE-OS 16 19 531 durch Kondensation von Perylentetracarbonsäure mit Ammoniak, werden in 1 920 g Schwefelsäure (10%ig) eingetragen und gelöst. Nachdem man in diese Lösung 3 g Natriumjodid zugegeben hat, werden nun im Laufe von 9 Stunden 273 g Chlor bei 25°C eingeleitet, wobei man nach 3 und 6 Stunden jeweils weitere 3 g Natriumjodid nachsetzt. Daraufhin werden dem Chlorierungsgemisch 1 280 g 50%ige Schwefelsäure tropfenweise zugefügt. Das hierbei ausgefallene Reaktionsprodukt wird anschließend abgesaugt, mit 1 350 g 80%iger Schwefelsäure nachgewaschen, durch Behandlung mit Wasser neutral gewaschen und bei 80°C getrocknet. Es resultieren 183,4 g eines chlorierten Perylentetracarbonsäure-diimids in Form des grobkristallinen Rohpigments mit einem Chlorgehalt von 25,1 %.

30 g des vorgängig als grobkristallines Rohpigment isolierten chlorierten Perylentetracarbonsäure-diimids mit einem Chlorgehalt von 25,1 % werden mit 150 g Natriumsulfat (wasserfrei) gemischt und danach in einem 1-Liter-Porzellanbehalter vorgelegt, der mit 1 300 g Porzellankugeln (vom Durchmesser 12 mm) als Mahlkörper beschickt ist, worauf der Ansatz 4 Stunden lang unter Schüttelbewegung auf einer Schwingmühle (vom Typ gemäß Bespiel 1) fein vermahlen wird. Daraufhin wird das Mahlgut abgesiebt, mittels Wasser ausgerührt, sodann abgesaugt, durch Behandlung mit Wasser sulfatfrei gewaschen und bei 80°C getrocknet. Hieraus resultieren 27,9 g eines feinteiligen Rohpigments.

24 g des obigen feinteiligen Rohpigments werden nun unter Rühren in 220 ml Dimethylformamid eingetragen. Sodann erwärmt man die Mischung auf 100°C und rührt dieselbe 2 Stunden bei dieser Temperatur nach. Anschließend läßt man auf 25°C abkühlen, das gefinishte Erzeugnis wird abgesaugt, durch Behandlung mit Wasser dimethylformamidfrei gewaschen und bei 80°C getrocknet.

Man erhält 23,1 g eines Mischkristallpigments, das in der β-Phase vorliegt und eine mittlere Teilchengröße von 0,26 µm besitzt.
Bei der Ausprüfung des Pigments im AM6-Lack werden brillante, rote und hochdeckende Lackierungen mit einwandfreier Überlackierechtheit erzielt. Die Millbase-Rheologie des Produktes wird mit Note 5 bewertet.

### Beispiel 7

25 g halogenfreies Perylen-3,4,9,10-tetracarbonsäure-diimid, hergestellt nach den Angaben in der DE-OS 16 19 531 durch Kondensation von Perylentetracarbonsäure mit Ammoniak, werden in 320 g Schwefelsäure-monohydrat eingetragen und gelöst. Dieser Lösung fügt man außerdem 0,5 g Natriumjodid hinzu und leitet nun während 9 Stunden 44,5 g Chlor bei 25°C ein, wobei im Abstand von 3 und 6 Stunden nochmals je 0,5 g Natriumjodid nachgesetzt werden. Nach Abschluß des Chlorierungsvorgangs läßt man auf 20°C abkühlen und unter guter Kühlung werden dann bei 20-30°C innerhalb von 10 Minuten 80 ml Wasser zugetropft. Danach wird das Reaktionsgemisch auf 120°C erhitzt und 3 Stunden bei dieser Temperatur nachgerührt. Nach dem Abkühlen auf 60°C wird das ausgefallene Erzeugnis abgesaugt und mit 125 g 80%iger Schwefelsäure nachgewaschen, durch Behandlung mit Wasser neutral gewaschen und bei 80°C getrocknet.

Man erhält 29,5 g eines Mischkristallpigments, das in der β-Phase vorliegt und eine mittlere Teilchengröße von 0,21 µm besitzt.
Bei der Ausprüfung des Pigments im AM6-Lack werden brillante, rote und hochdeckende Lackierungen mit einwandfreier Überlackierechtheit erzielt. Die Millbase-Rheologie des Produktes (15%ig) wird mit Note 5 bewertet.

### Beispiel 8

36 g chloriertes Perylen-3,4,9,10-tetracarbonsäure-diimid als Rohpigment mit einem Chlorgehalt von 26,8 % und 4 g bromiertes Perylen-3,4,9,10-tetracarbonsäure-diimid als Rohpigment mit einem Bromgehalt von 25,45 %, beide Ausgangsstoffe sind in grobkristallinen Zustand analog dem in der EP-PS 0 039 912 beschriebenen Verfahren hergestellt, werden bei 25°C in 800 g Schwefelsäure (100%ig) eingetragen und gelöst, worauf man dieser Lösung 533 g 50%ige Schwefelsäure tropfenweise zufügt. Das hierbei niedergeschlagene feste Produkt wird abgesaugt, anschließend mit 240 g 80%iger Schwefelsäure nachgewaschen, durch Behandlung mit Wasser neutral gewaschen und bei 80°C getrocknet. Es resultieren 38,4 g eines gemischt-halogenierten Perylentetracarbonsäure-diimids in Form des grobkristallinen Rohpigments.

30 g der obigen, als grobkristallines Rohpigment entstandenen gemischt-halogenierten Perylentetracarbonsäure-diimids werden mit 150 g Natriumsulfat (wasserfrei) gemischt und danach in ein 1-Liter-Porzellangefäß eingebracht das mit 1 300 g Porzellankugeln (vom Durchmesser 12 mm) als Mahlkörper gefüllt ist. Diese Mischung wird sodann 4 Stunden lang unter Schütteln auf einer Schwingmühle (des Typs wie in Beispiel 1) fein vermahlen. Das hierbei angefallene Mahlgut wird abgesiebt, mittels Wasser ausgerührt, daraufhin abgesaugt, durch Behandlung mit Wasser sulfatfrei gewaschen und bei 80°C getrocknet. Diese Trockenmahlung erbringt 27,9 g eines feinteiligen Rohpigments.

24 g des oben isolierten feinteiligen Rohpigments werden nun unter Rühren in 220 ml Dimethylformamid eingetragen, auf 100°C erhitzt und 2 Stunden bei dieser Temperatur nachgerührt. Anschließend läßt man auf 25°C abkühlen, das gefinishte Erzeugnis wird danach abgesaugt, mittels Wasser dimethylformamidfrei gewaschen und bei 80°C getrocknet.

Man erhält 22,8 g eines Mischkristallpigments, das überwiegend in der β-Phase vorliegt und eine Teilchengröße von 0,16 µm besitzt.
Bei der Ausprüfung des Pigments im AM6-Lack werden rote, hochdeckende Lackierungen erzielt. Die Millbase-Rheologie des Produktes (15%ig) wird mit Note 5 bewertet.

## Patentansprüche

1. Mischkristallpigmente auf Basis von halogenierten Perylen-3,4,9,10-tetracarbonsäure-diimiden (Perylimiden), im wesentlichen gebildet aus zwei oder mehr Einzelkomponenten der allgemeinen Formel I 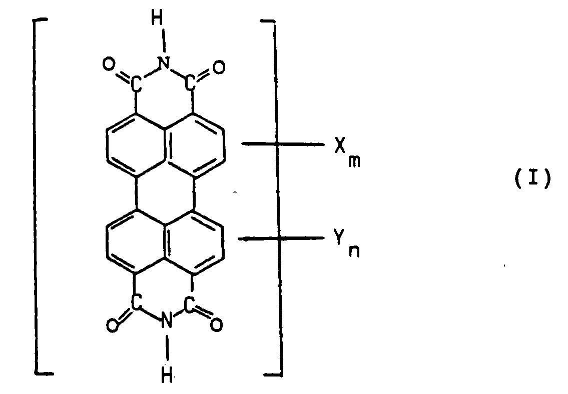 worin X ein Chloratom und Y ein Bromatom bedeuten sowie m und n ganze Zahlen von 0 bis 4 darstellen, dadurch gekennzeichnet, daß der Gesamtchlorgehalt im Mischkristall ≦ 25,2 Gew.-% beträgt und die Mischkristalle überwiegend oder vollständig in der β-Modifikation vorliegen sowie eine mittlere Teilchengröße von ≧ 0,15 µm aufweisen.

2. Mischkristallpigmente gemäß Anspruch 1, dadurch gekennzeichnet, daß die mittlere Teilchengröße im Bereich zwischen 0,15 µm und 0,5 µm, vorzugsweise im Bereich von 0,15 µm bis 0,3 µm liegt.

3. Mischkristallpigmente gemäß Anspruch 1 oder 2, dadurch gekennzeichnet, daß der Gesamtchlorgehalt im Mischkristall im Bereich zwischen 15,0 und 25,2 Gew.-% liegt.

4. Mischkristallpigmente gemäß einem oder mehreren der Ansprüche 1 bis 3, dadurch gekennzeichnet, daß die an der Mischkristallbildung beteiligten Einzelkomponenten der Formel I im wesentlichen ein Gemisch aus Trichlor- und Tetrachlor-perylimid darstellen.

5. Mischkristallpigmente gemäß Anspruch 1 oder 2, dadurch gekennzeichnet, daß der Gesamtbromgehalt im Mischkristall im Bereich zwischen 20 und 30 Gew.-% liegt.

6. Mischkristallpigmente gemäß einem oder mehreren der Ansprüche 1 bis 5, dadurch gekennzeichnet, daß jede der Einzelkomponenten der Formel I in einer Menge von 1 bis 99 %, bezogen auf das Gesamtgewicht des Mischkristalles, vorliegt.

7. Mischkristallpigmente gemäß Anspruch 6, dadurch gekennzeichnet, daß eine der Einzelkomponenten in einer Gewichtsmenge von 70 bis 95 % vorliegt.

8. Verfahren zur Herstellung der gemäß einem oder mehreren der Ansprüche 1 bis 7 definierten Mischkristallpigmente, dadurch gekennzeichnet, daß man zwei oder mehr fein- oder grobkristalline Perylimid-Einzelkomponenten der Formel I, die bezüglich ihres chemischen Aufbaus voneinander verschieden sind, oder grobkristalline Perylimid-Mischkristallverbindungen aus solchen unterschiedlichen Einzelkomponenten der Formel I, zunächst durch
(1) Perlmahlung in einem flüssigen Medium, oder
(2) Trockenmahlung mit oder ohne Salzzusatz, oder
(3) Auflösen in konzentrierter anorganischer Säure und nachheriges Ausfällen durch Eingießen der Lösung in Wasser oder verdünnte Säuren, oder
(4) geeignete Syntheseführung bei welcher die Reaktionsbedingungen so gewählt werden, daß die gebildeten Perylimid-Mischkristallverbindungen nach der Halogenierung in gelöstem Zustand vorliegen und durch Vereinigung dieser Lösung mit Wasser abgeschieden werden,
in die entsprechenden feinteiligen Perylimid-Mischkristallverbindungen überführt und diese anschließend durch einen Finish in einem inerten organischen Lösungsmittel oder in einer verdünnten anorganischen Säure bei Temperaturen von 50° bis 200°C in die aus den Einzelkomponenten der allgemeinen Formel I aufgebauten Perylimid-Mischkristallpigmente umwandelt.

9. Verfahren gemäß Anspruch 8, dadurch gekennzeichnet, daß man den Finish bei Temperaturen von 80° bis 160°C durchführt.

10. Verfahren gemäß Anspruch 8 oder 9, dadurch gekennzeichnet, daß man den Finish durch Erhitzen in einem inerten organischen Lösemittel von polarer Natur durchführt.

11. Verfahren gemäß Anspruch 8 oder 9, dadurch gekennzeichnet, daß man den Finish durch Erhitzen in verdünnter Schwefelsäure durchführt.

12. Verfahren gemäß einem oder mehreren der Ansprüche 8 bis 11, dadurch gekennzeichnet, daß man die Feinverteilung der Rohpigmente unter der Einwirkung von Scherkräften vornimmt.

13. Verfahren gemäß einem oder mehreren der Ansprüche 8 bis 12, dadurch gekennzeichnet, daß man die Maßnahmen zur Feinverteilung und zum Finish der Mischkristallpigmente in Gegenwart oberflächenaktiver Mittel durchführt.

14. Verwendung der gemäß einem oder mehreren der Ansprüche 1 bis 7 definierten Mischkristallpigmente als Farbmittel zum Pigmentieren von hochmolekularen organischen Materialien natürlicher oder synthetischer Herkunft in Form plastischer Massen, Schmelzen, Spinnlösungen, Lacken, Anstrichfarben oder Druckfarben.

15. Verwendung gemäß Anspruch 14 zum Pigmentieren (Einfärben) von Lacksystemen des Typs der Alkyd-Melaminharz- oder Acryl-Melaminharz-Einbrennlacke oder des Typs der Zweikomponentenlacke auf Basis von mit Polyisocyanat vernetzbaren Acrylharzen.

16. Verwendung gemäß Anspruch 14 zum Pigmentieren (Einfärben) von verformbaren Kunststoffen.

17. Verwendung der gemäß einem oder mehreren der Ansprüche 1 bis 7 definierten Mischkristallpigmente als deckende Rotpigmente.

## Claims

1. A mixed crystal pigment based on halogenated perylene-3,4,9,10-tetracarboxylic diimides (perylimides), essentially formed from two or more individual components of the general formula I 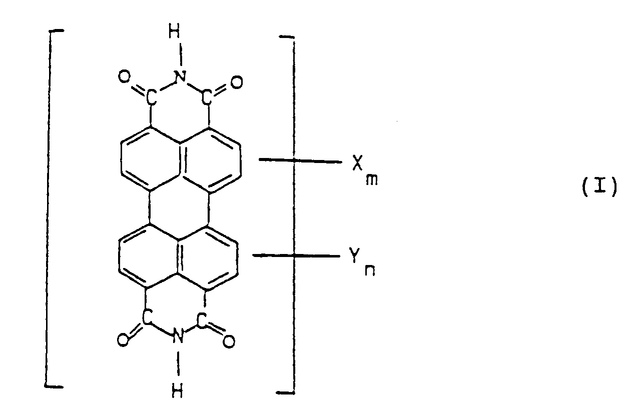 where X is chlorine, Y is bromine and m and n are each integers from 0 to 4, characterized in that the total chlorine content of the mixed crystal is ≦ 25.2% by weight and the mixed crystal is predominantly or wholly present in the β-modification and has an average particle size of ≧ 0.15 µm.

2. A mixed crystal pigment as claimed in claim 1, characterized in that the average particle size is within the range between 0.15 µm and 0.5 µm, preferably within the range from 0.15 µm to 0.3 µm.

3. A mixed crystal pigment as claimed in claim 1 or 2, characterized in that the total chlorine content of the mixed crystal is within the range between 15.0 and 25.2% by weight.

4. A mixed crystal pigment as claimed in one or more of claims 1 to 3, characterized in that the individual components of the formula I involved in forming the mixed crystal are essentially a mixture of tri- and tetrachloroperylimide.

5. A mixed crystal pigment as claimed in claim 1 or 2, characterized in that the total bromine content of the mixed crystal is within the range between 20 and 30% by weight.

6. A mixed crystal pigment as claimed in one or more of claims 1 to 5, characterized in that every one of the individual components of the formula I is present in an amount of 1 to 99%, based on the total weight of the mixed crystal.

7. A mixed crystal pigment as claimed in claim 6, characterized in that one of the individual components is present in a weight proportion of 70 to 95%.

8. A process for preparing a mixed crystal pigment as defined in one or more of claims 1 to 7, which comprises first converting two or more finely or coarsely crystalline perylimide individual components of the formula I which differ from one another in respect of their chemical structure, or coarsely crystalline perylimide mixed crystal compounds formed from such different individual components of the formula I, by
(1) bead milling in a liquid medium, or
(2) dry milling in the presence or absence of a salt, or
(3) dissolving in concentrated inorganic acid and subsequent precipitation by pouring the solution into water or dilute acid, or
(4) suitable synthesis management, where the reaction conditions are chosen in such a way that the perylimide mixed crystal compounds formed are present in the dissolved state after halogenation and are precipitated by combining this solution with water,
into the corresponding finely divided perylimide mixed crystal compounds and subsequently converting these by conditioning in an inert organic solvent or in a dilute inorganic acid at temperatures of 50° to 200°C into the perylimide mixed crystal pigment composed of individual components of the general formula I.

9. The process as claimed in claim 8, characterized in that the conditioning is carried out at temperatures of 80° to 160°C.

10. The process as claimed in claim 8 or 9, characterized in that the conditioning is carried out by heating in an inert organic solvent of polar nature.

11. The process as claimed in claim 8 or 9, characterized in that the conditioning is carried out by heating in dilute sulfuric acid.

12. The process as claimed in one or more of claims 8 to 11, characterized in that the comminution of the crude pigments is carried out by the action of shearing forces.

13. The process as claimed in one or more of claims 8 to 12, characterized in that the comminution and conditioning of the mixed crystal pigment are carried out in the presence of surface-active agents.

14. The use of a mixed crystal pigment as defined in one or more of claims 1 to 7 as a colorant for pigmenting high molecular weight organic materials of natural or synthetic origin in the form of plastic masses, melts, spinning solutions, coatings, paints or printing inks.

15. A use as claimed in claim 14, for pigmenting coating systems of the type of the alkyd/melamine resin or acrylic/melamine resin baking finishes or of the type of the two-component coating compositions based on polyisocyanate-crosslinkable acrylic resins.

16. A use as claimed in claim 14, for pigmenting formable plastics.

17. The use of a mixed crystal pigment as defined in one or more of claims 1 to 7, as a high-hiding red pigment.

## Revendications

1. Pigments en cristaux mixtes à base de diimides de l'acide pérylène-3,4,9,10-tétracarboxylique halogénés (appelés pérylimides), essentiellement formés de deux composants individuels ou plus de formule générale I ci-dessous 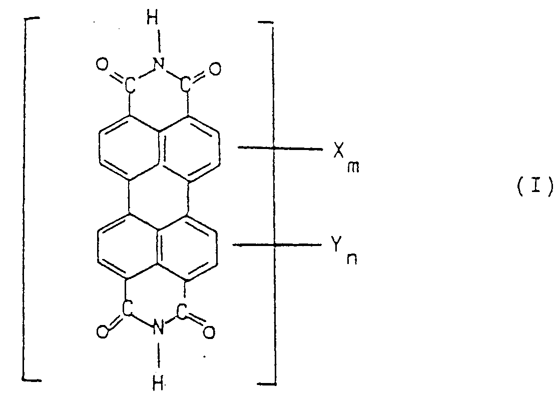 dans laquelle X désigne un atome de chlore, Y un atome de brome et m et n des entiers de 0 à 4, qui sont caractérisés en ce que la teneur totale en chlore du cristal mixte est égale ou inférieure à 25,2% en poids et en ce que les cristaux mixtes sont principalement ou totalement dans la modification β, en particules d'une dimension moyenne égale ou supérieure à 0,15 µm.

2. Pigments en cristaux mixtes selon la revendication 1, caractérisés en ce que la dimension moyenne de leurs particules se situe entre 0,15 et 0,5 µm, de préférence entre 0,15 et 0,3 µm.

3. Pigments en cristaux mixtes selon la revendication 1 ou 2, caractérisés en ce que la teneur totale en chlore du cristal mixte se situe entre 15,0 et 25,2% en poids.

4. Pigments en cristaux mixtes selon une ou plusieurs des revendications 1 à 3, caractérisés en ce que les composants individuels de formule I participant à la formation des cristaux mixtes constituent essentiellement un mélange de pérylimide trichloré et de pérylimide tétrachloré.

5. Pigments en cristaux mixtes selon la revendication 1 ou 2, caractérisés en ce que la teneur totale en brome du cristal mixte est comprise entre 20 et 30% en poids.

6. Pigments en cristaux mixtes selon une ou plusieurs des revendications 1 à 5, caractérisés en ce que la proportion de chacun des composants individuels de formule I est de 1 à 99% du poids total du cristal mixte.

7. Pigments selon la revendication 6, caractérisés en ce que la proportion pondérale de l'un des composants individuels est de 70 à 95%.

8. Procédé de préparation de pigments en cristaux mixtes tels que définis à une ou plusieurs des revendications 1 à 7, procédé caractérisé en ce que l'on transforme deux composants individuels ou plus de formule I de pérylimides à fins ou gros cristaux, qui diffèrent les uns des autres par leur structure chimique, ou des composés à cristaux mixtes de pérylimides en gros cristaux de tels composants individuels différents, par
(1) broyage avec des perles dans un milieu liquide ;
(2) broyage à sec avec ou sans sels;
(3) dissolution dans un acide minéral concentré, puis précipitation en versant la solution dans de l'eau ou dans un acide dilué ; ou bien
(4) une conduite appropriée de la synthèse en déterminant les conditions réactionnelles pour que les composés formés à cristaux mixtes de pérylimides soient à l'état dissous après l'halogénation et qu'ils se séparent quand on mélange la solution à de l'eau,
en les composés correspondants à cristaux mixtes de pérylimides finement divisés, puis on transforme ceux-ci, par un finissage effectué dans un solvant organique inerte ou dans un aide minéral dilué à des températures de 50 à 200°C, en les pigments à cristaux mixtes de pérylimides formés par les composants individuels de formule I.

9. Procédé selon la revendication 8, caractérisé en ce que l'on effectue le finissage à des températures de 80 à 160°C.

10. Procédé selon la revendication 8 ou 9, caractérisé en ce que l'on effectue le finissage par un chauffage dans un solvant organique inerte de nature polaire.

11. Procédé selon la revendication 8 ou 9, caractérisé en ce que l'on effectue le finissage par un chauffage dans de l'acide sulfurique dilué.

12. Procédé selon une ou plusieurs des revendications 8 à 11, caractérisé en ce que l'on effectue la fine division des pigments bruts sous l'action de forces de cisaillement.

13. Procédé selon une ou plusieurs des revendications 8 à 12, caractérisé en ce que l'on effectue les opérations de fine division et de finissage des pigments en présence d'agents surfactifs.

14. L'emploi des pigments à cristaux mixtes selon une ou plusieurs des revendications 1 à 7 comme colorants pour pigmenter des matières organiques macromoléculaires d'origine naturelle ou synthétique, en masses plastiques ou fondues, solutions de filage, vernis, laques ou peintures ou couleurs d'impression.

15. Emploi selon la revendication 14 pour pigmenter à coeur des vernis du genre des vernis à cuire de résines alkydes/mélamine ou acryliques/mélamine ou des vernis à deux composants à base de résines acryliques réticulables par des polyisocyanates.

16. Emploi selon la revendication 14 pour pigmenter à coeur des matières plastiques façonnables.

17. Emploi comme pigments rouges couvrants des pigments à cristaux mixtes selon une ou plusieurs des revendications 1 à 7.
